# EUROPÄISCHE PATENTANMELDUNG

(11) **EP 4 180 678 A1**
(43) Veröffentlichungstag der Anmeldung: **17.05.2023**
(21) Anmeldenummer: 22206332.3
(22) Anmeldetag: 09.11.2022
(51) Int. Cl.: F16C 11/06, F16F 1/371, F16C 11/08, F16F 1/38

(54) **ELASTOMER-KUGELGELENK, INSBESONDERE FÜR FAHRZEUGE**

(30) Priorität: 10.11.2021 DE 102021129206
(71) Anmelder: Jörn GmbH, 71336 Waiblingen (DE)
(72) Erfinder: Reinke, Kai, 71686 Remseck (DE); Mursinsky, Jörg, 71522 Backnang (DE)
(74) Vertreter: Liebl, Thomas

(57) **Zusammenfassung**

Die Erfindung betrifft ein Kugelgelenk mit einem Kugelzapfen (10) als Lagerinnenteil und als erstes Lagerteil, mit einem Kugelteil (12) als ballige Verdickung und einer vom Kugelteil (12) abragenden Anschlusspratze oder zwei beidseitig gegenüberliegend vom Kugelteil (12) abragenden Anschlusspratzen (3, 4), mit einem Lagergehäuse (21) als zweitem Lagerteil, das das Kugelteil (12) umgibt, und mit wenigstens einem zwischen dem Kugelteil (12) und dem Lagergehäuse (21) unter Vorspannung angeordneten und das Kugelteil (12) umgreifenden Elastomer-Element (16). Erfindungsgemäß weist der Kugelzapfen (10) ein langgestrecktes, metallisches Zapfenteil (1) auf, das die eine oder die beiden Anschlusspratzen (3, 4), sowie ein einteilig und materialeinheitlich daran anschließendes Kugelinnenteil (5) bildet, wobei das Kugelinnenteil (5) mit einem Kunststoff zur Ausbildung der balligen Verdickung (12) als Kunststoffkörper (11) festhaftend umspritzt oder umgossen ist.

## Beschreibung

Die Erfindung betrifft ein Kugelgelenk, insbesondere für Fahrzeuge, nach dem Oberbegriff des Anspruchs 1.

Kugelgelenke weisen im Unterschied zur einfachen, üblichen Buchsenlagern eine hohe Steifigkeit und Belastbarkeit in axialer Richtung insbesondere bei einem Einsatz mit kardanischen Bewegungen auf. Ein dazu bekanntes Kugelgelenk (DE 10 2016 008 773 A1) besteht aus einem Kugelzapfen als Lagerinnenteil und erstem Lagerteil, mit einem Kugelteil als ballige Verdichtung und zwei beidseitig gegenüberliegend vom Kugelteil abragenden Anschlussspratzen. Ein Lagergehäuse als zweites Lagerteil umgibt das Kugelteil, wobei zwischen dem Lagergehäuse und dem Kugelteil ein Elastomer-Metall-Element unter Vorspannung angeordnet ist. Das Elastomer-Metall-Element besteht hier aus zwei Kugelschalenhälften, die auf das Kugelteil radial aufgesteckt sind und im fertig montierten Zustand des Kugelgelenks axial zusammengespannt und mit einem Sicherungsring gesichert sind. Bei anderen allgemein bekannten Ausführungsformen sind die zwei Kugelschalenhälften axial aufgesteckt oder eine Elastomerschicht ist am Kugelteil anvulkanisiert. Weiter sind Ausführungsformen mit nur einer seitlichen Anschlusspratze bekannt (DE 10 2010 045 677 B4).

Solche bekannten elastischen Kugelgelenke für die Übertragung hoher Lasten sind regelmäßig sehr schwer, wobei der Kugelzapfen als Lagerinnenteil, meist als Bolzen, Pratze oder Rohr mit einer kugelartigen und balligen Verdickung ausgeformt ist. Mit dem Begriff "Kugelgelenk" werden in der vorliegenden Anmeldung somit nicht nur Ausformungen in der reinen Kugelgestalt, sondern auch ähnliche, kugelartige, ballige Ausformungen bezeichnet. Eine solche kugelartige Ausformung beinhaltet eine relativ große Masse und hat als wesentliche Funktion die Bereitstellung einer stabilen kugelartigen Oberfläche, über die auf Zwischenschaltung von Elastomermaterial Kräfte und Momente übertragen werden sollen.

Eine solche stabile kugelartige Oberfläche wird bisher dadurch geschaffen, dass der Kugelzapfen einteilig und materialeinheitlich aus Metall, insbesondere aus Stahl hergestellt ist, was zu dem ungünstig hohen Gewicht solcher Kugelgelenke führt. Bei höheren Stückzahlen gleicher Kugelgelenke können die Kugelzapfen insbesondere als Guss- oder Schmiedeteile hergestellt werden. Bei kleinen Stückzahlen ist dafür dieser Herstellaufwand zu groß und die Kugelzapfen werden dann spanend hergestellt. Dabei werden wegen der Kugelform Halbzeuge mit großem Durchmesser bei entsprechend viel Zerspanungsarbeit verwendet, was zu einer kostenintensiven und umweltbelastenden Herstellung führt.

Der wesentliche Nachteil der bisherigen Kugelgelenke besteht in deren hohem Gewicht, das insbesondere beim Einsatz von großen schweren Kugelgelenken in Nutzfahrzeugen, zum Beispiel Lastkraftwagen, oder gegebenenfalls auch in Eisenbahndrehgestellen die Energieeffizienz solcher Fahrzeuge reduziert und den Forderungen nach erhöhtem Umweltschutz und verbesserter Nachhaltigkeit entgegensteht.

Aufgabe der Erfindung ist es daher, ein gattungsgemäßes Kugelgelenk so weiterzubilden, dass damit eine deutliche Gewichtsreduzierung erreichbar ist. Diese Aufgabe wird mit den Merkmalen des Anspruchs 1 gelöst. Vorteilhafte Weiterbildungen sind Gegenstand der Unteransprüche.

Gemäß Anspruch 1 ist ein Kugelgelenk, insbesondere für Fahrzeuge, mit einem Kugelzapfen als Lagerinnenteil und als erstes Lagerteil vorgesehen, wobei der Kugelzapfen ein Kugelteil als ballige Verdickung und eine vom Kugelteil abragende Anschlusspratze oder zwei beidseitig gegenüberliegend vom Kugelteil abragende Anschlusspratzen aufweist. Weiter weist das Kugelgelenk ein Lagergehäuse als zweites Lagerteil auf, das den Kugelteil umgibt, wobei weiter wenigstens ein zwischen dem Kugelteil und dem Lagergehäuse unter Vorspannung angeordnetes und das Kugelteil umgreifendes Elastomer-Element vorgesehen ist. Erfindungsgemäß weist der Kugelzapfen ein langgestrecktes, metallisches Zapfenteil auf, das die eine Anschlusspratze oder die beiden Anschlusspratzen sowie ein einteilig und materialeinheitlich daran anschließendes Kugelinnenteil bildet, wobei das Kugelinnenteil zur Ausbildung der balligen Verdickung als Kunststoffkörper mit einem Kunststoff, insbesondere einem hochfesten Kunststoff, umgeben und beschichtet ist, vorzugsweise festhaftend umspritzt oder umgossen ist.

Damit besteht das Kugelteil mit der balligen Verdickung aus den zwei Materialien Metall und Kunststoff und nicht mehr, wie im Stand der Technik, materialeinheitlich nur aus Metallmaterial. Da der verwendete Kunststoff ein kleineres spezifisches Gewicht als das Metallmaterial aufweist, ist das Kugelgelenk insgesamt mit einem vergleichsweise geringeren Gewicht herstellbar als bei einem reinen Metallteil.

Beim Einsatz derartiger gewichtsreduzierter Kugelgelenke ergibt sich eine vorteilhafte Steigerung der Energieeffizienz beim Einsatz in Fahrzeugen. Zudem können solche gewichtsreduzierten Kugelgelenke im Vergleich zu bisherigen Herstellkosten mit vergleichbaren oder eher geringeren Kosten hergestellt werden. Insbesondere können bei geringen Stückzahlen die Zerspanungsarbeit und der Metallabfall reduziert werden, so dass dann wesentlich geringere Herstellkosten auftreten.

Das langgestreckte metallische Zapfenteil als Halbzeug und Ausgangsmaterial kann einen zylindrischen Querschnitt aufweisen und kostengünstig aus einem Rundstahlabschnitt oder Stahlrohrabschnitt bestehen. Gegebenenfalls kann eine noch günstigere Variante mit einem rechteckigen Querschnitt als Flachstahlabschnitt eingesetzt werden. Das metallische Zapfenteil ist dabei entsprechend der auftretenden Belastungen auszulegen und auszuwählen. Zusätzliche spanende Bearbeitungen können damit auf ein Minimum eingeschränkt werden, wobei gegebenenfalls zusätzliche Bearbeitungen an den Anschlusspratzen durch Anschlussbohrungen und/oder individuelle Formanpassungen erforderlich werden.

Es versteht sich, dass der Kunststoff in Verbindung mit der erfindungsgemäßen Verwendung als Kunststoffkörper bei einem Kugelgelenk, insbesondere bei einem Kugelgelenk für Fahrzeuge, eine gewisse Festigkeit aufweisen muss. Dementsprechend ist der Kunststoff bevorzugt ein hochfester Kunststoff mit einer Zugfestigkeit von 80 bis 250 MPa und/oder einer Streckspannung/Bruchspannung von 50 bis 300 MPa ist, wobei die Zugfestigkeit und/oder die Streckspannung/Bruchspannung jeweils gemäß DIN EN ISO 527 bestimmt sind. Die Streckspannung ist dabei die Zugspannung bei der die Kurve im Spannungs-Dehnungs-Diagramm das erste Mal horizontal wird und sich die Probe einschnürt. Da es bei harten, relativ spröden Kunststoffen kein Strecken gibt, wird hier die Bruchspannung als kennzeichnender Wert verwendet. Sie ist also die Zugspannung zum Zeitpunkt des Bruchs. Streckspannung und Bruchspannung weichen in der Praxis meist nicht sehr voneinander ab.

Als Kunststoff, insbesondere als hochfester Kunststoff, für den Kunststoffkörper ist insbesondere ein glasfaserverstärkter Kunststoff geeignet, der nach wie vor ein im Vergleich zum Metallmaterial des Zapfenteils wesentlich kleineres spezifisches Gewicht aufweist. Besonders bevorzugt ist hierbei ein glasfaserverstärkter Kunststoff mit einem Glasfaseranteil von 15 bis 70%, bevorzugt mit einem Glasfaseranteil von 30 bis 50%, vorgesehen. Besonders geeignet als Kunststoffe, insbesondere als mit Glasfasern verstärkte Kunststoffe, sind Polycaprolactam-Kunststoffe oder Polyamid-Kunststoffe. Konkrete Beispiele für Kunststoffe wären PA6 und PA 66, beide bevorzugt, aber nicht notwendig, glasfaserverstärkt.

Der bauartbedingte wesentliche Unterschied eines Kugelgelenks zu einer üblichen Buchsenlagerung ist eine hohe Steifigkeit und Belastbark in axialer Richtung, wobei sich die auftretenden Kräfte an der Kugelform abstützen. Bei einem einfachen Umspritzen oder Umgießen eines relativ glatten Zapfenteils zieht sich der erhitzte Kunststoff beim Abkühlen zusammen und schrumpft festhaftend auf der Zapfenteiloberfläche auf. Damit liegt die axiale Belastbarkeit deutlich über dem Niveau einer üblichen Buchse, jedoch noch unterhalb des Niveaus eines bisher üblichen Kugelgelenks mit einem materialeinheitlichen, metallischen Kugelzapfen. Durch die Anbringung einer Struktur mit Hinterschnitten auf der Oberfläche des Zapfenteils im Bereich der Kunststoffauflage des Kunststoffkörpers lässt sich die maximal übertragbare Axialkraft erheblich steigern. Diese Struktur kann zum Beispiel mittels einer Oberflächenrändelung als Riffelung gebildet sein. Eine Steigerung der übertragbaren Axialkraft ist alternativ oder zusätzlich durch die Anbringung von Ausnehmungen und/oder Rillen und/oder Rippen, je nach den erforderlichen Gegebenheiten, möglich.

Es sind eine Vielzahl von Kugelgelenkausführungen allgemein bekannt, die sich in der Anordnung und Geometrie des Lagergehäuses und der Anordnung, der Vorspannung und Ausgestaltung der Elastomerelemente unterscheiden. Allen diesen Ausführungen ist gemeinsam, dass sie einen Kugelzapfen als Lagerinnenteil aufweisen. Erfindungsgemäß ist gerade dieser Kugelzapfen gewichtsreduziert ausgebildet und kann im Prinzip bei den vorstehend genannten unterschiedlichen Kugelgelenken verwendet werden, wobei diese damit insgesamt gewichtsreduziert sind.

Bevorzugt kann der erfindungsgemäße, gewichtsreduzierte Kugelzapfen in Verbindung mit einer Ausführungsform eines Kugelgelenks eingesetzt werden, bei der ein Elastomer-Metall-Element verwendet wird, das eine Elastomerschicht aufweist, die den balligen Bereich des Kunststoffkörpers des Kugelteils umgibt und dort anvulkanisiert ist oder dort ortsfest durch Vorspannung angepresst ist. Die Elastomerschicht kann zudem auch den balligen Bereich des Kunststoffkörpers des Kugelteils und gegebenenfalls beidseitig daran anschließende, ebenfalls in Verbindung mit der balligen Verdickung durch Kunststoff ausgebildete, zapfenseitige Ringschultern umgeben und dort anvulkanisiert sein oder dort ortsfest durch Vorspannung angepresst sein.

An beiden, axial gegenüberliegenden Seiten der Elastomerschicht ist jeweils ein, vorzugsweise metallischer, Stützring, zum Beispiel in Schräglage entsprechend der Schrägstellung der Kugelform, anvulkanisiert, was insbesondere zur Aufbringung einer Vorspannung in der Elastomerschicht dient.

Das Lagergehäuse weist dazu einen Aufnahmeraum auf, vorzugsweise einen zylindrischen Aufnahmeraum, in dem der Kugelzapfen mit dem Kugelteil mit der balligen Verdickung, gegebenenfalls mit Ringschultern, und der umgebenden Elastomerschicht mit den Stützringen aufgenommen ist.

Die Elastomerschicht liegt bevorzugt an der Innenseite des Aufnahmeraums ortsfest durch Vorspannung an, indem der Kugelzapfen axial seitlich in den Aufnahmeraum eingesetzt und mit einem Stützring an einem umlaufenden Stützsteg im Aufnahmeraum abgestützt ist. Der gegenüberliegende Stützring ist nach einer Verlagerung durch eine mit einer Pressvorrichtung aufgebrachten, axialen Einpresskraft als Vorspannkraft in der verlagerten Position mit einem Sicherungsring in einer umlaufenden Sicherungsnut im Aufnahmeauge fixiert.

In einer weiteren Ausführungsform kann das Elastomer-Metall-Element geteilt sein und zwei Kugelschalenhälften aufweisen, die auf das Kugelteil axial seitlich aufgesteckt und anvulkanisiert sind oder durch Vorspannung gehalten sind und die im fertig montierten Zustand des Kugelgelenks axial zusammengespannt und mit dem Sicherungsring gesichert sind.

Anhand einer Zeichnung wird die Erfindung weiter erläutert.

Es zeigen:
- Figur 1: ein Zapfenteil eines Kugelzapfens mit beidseitigen Anschlusspratzen und einem dazwischenliegenden Kugelinnenteil;
- Figur 2: einen kompletten Kugelzapfen mit einer teilweise geschnittenen balligen Verdickung als Kunststoffkörper;
- Figur 3: einen teilweisen Schnitt durch einen Kugelzapfen einer Ausführungsform mit einer Oberflächenriffelung auf dem Zapfenteil im Bereich des Kunststoffkörpers;
- Figur 4: einen Längsschnitt durch ein fertig montiertes Kugelgelenk;
- Figur 5: eine Seitenansicht eines Zapfenteils aus einem Flachstahlabschnitt;
- Figur 6: eine Draufsicht auf das Zapfenteil nach Figur 5;
- Figur 7: einen Kugelzapfen mit einem Zapfenteil nach Figur 6 mit einem teilweisen geschnitten aufgespritzten Kunststoffkörper; und
- Figur 8: eine Seitenansicht eines kompletten Kugelzapfens.

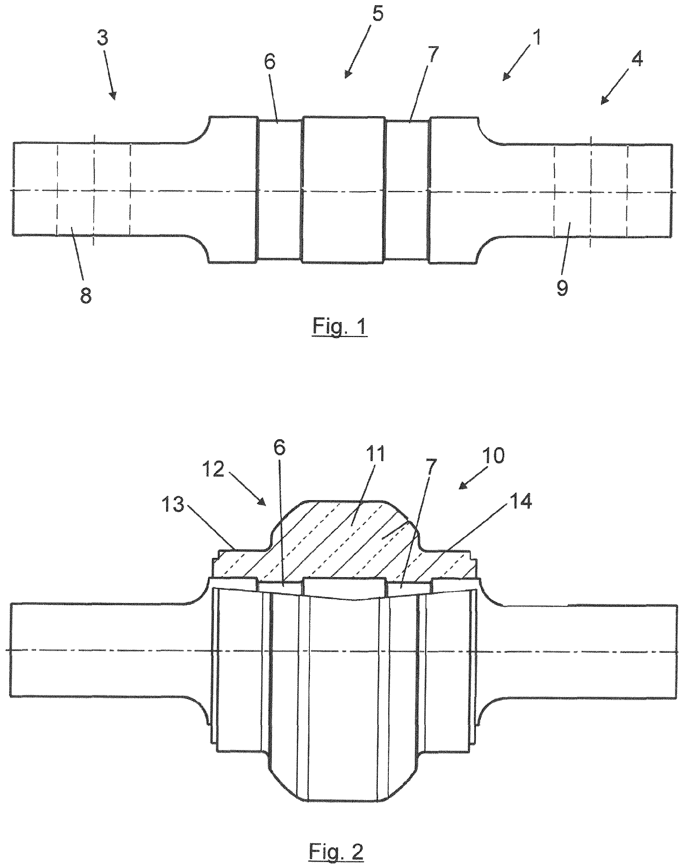

In Figur 1 ist ein langgestrecktes metallisches Zapfenteil 1 eines Kugelgelenks 2 dargestellt mit einem zylindrischen Querschnitt als Rundstahlabschnitt. Das Zapfenteil 1 bildet materialeinheitlich und einstückig zwei gegenüberliegende Anschlusspratzen 3, 4 sowie einen dazwischenliegenden Kugelinnenteil 5. Das Kugelinnenteil 5 weist zwei beabstandete, umlaufende Querrillen 6, 7 auf. Zudem sind die Anschlusspratzen 3, 4 mit kleinerem Durchmesser im Vergleich zum Kugelinnenteil 5 und mit Bohrungen 8, 9 an aktuelle Einbaugegebenheiten angepasst.

In Figur 2 ist ein teilweise geschnittener fertiger Kugelzapfen 10 als Lagerinnenteil des Kugelgelenks 2 gezeigt, bei dem auf dem Kugelinnenteil 5 durch Umspritzen mit einem Kunststoff ein Kunststoffkörper 11 als ballige Verdickung 12 angeformt ist. Der Kunststoffkörper 11 bildet zu beiden Seiten der balligen Verdickung 12 noch umlaufende Ringschultern 13, 14. Zudem ist der Kunststoffkörper 11 festhaftend in den Querrillen 6, 7 verankert und damit gegen hohe Axialkräfte sicher abgestützt. Der Kunststoff ist bevorzugt ein hochfester Kunststoff mit einer Zugfestigkeit von 80 bis 250 MPa und/oder einer Streckspannung/Bruchspannung von 50 bis 300 MPa, wobei die Zugfestigkeit und/oder die Streckspannung/Bruchspannung jeweils gemäß DIN EN ISO 527 bestimmt sind. Zudem kann der Kunststoff mit Glasfasern verstärkt sein und je nach Anwendungsfall und Einsatzgebiet einen Glasfaseranteil von 15 bis 70% aufweisen. Generell eignen sich als Kunststoffmaterialien insbesondere, aber nicht nur, Polyamid-Kunststoffe oder Polycaprolactam-Kunststoffe.

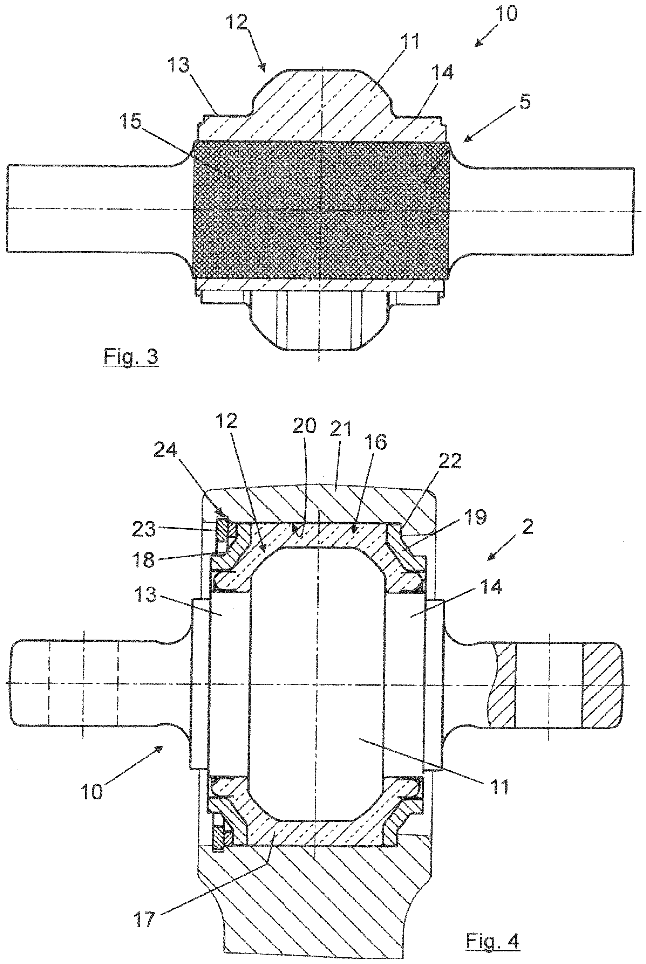

In Figur 3 ist dazu eine alternative Anordnung für eine solche Abstützfunktion gezeigt, indem anstelle der Querrillen 6, 7 auf dem Kugelinnenteil 5 eine Riffelung 15 angebracht ist.

In Figur 4 ist ein fertig montiertes Kugelgelenk 2 im Längsschnitt dargestellt, wobei ein Kugelzapfen 10 in der Ausführungsform nach Figur 2 oder Figur 3 als Lagerinnenteil des Kugelgelenks 2 verwendet ist.

Den Kunststoffkörper 11 mit der balligen Verdickung 12 und den Ringschultern 13, 14 umschließt ein Elastomer-Metall-Element 16, welches eine umlaufende Elastomerschicht 17 aufweist. Diese Elastomerschicht 17 umgibt den balligen Bereich des Kunststoffkörpers 11 und die beidseitig daran anschließenden, ebenfalls durch Kunststoff gebildeten zapfenseitigen Ringschultern 13, 14, wobei in der dargestellten Ausführungsform die Elastomerschicht 17 am Kunststoffkörper 11 anvulkanisiert ist.

An beiden axial gegenüberliegenden Seiten der Elastomerschicht 17 ist jeweils ein metallischer Stützring 18, 19 in einer Schrägstellung entsprechend der Außenform der balligen Verdickung 12 anvulkanisiert.

Der Kugelzapfen 10 mit der anvulkanisierten Elastomerschicht 17 und den Stützringen 18, 19 ist in einen zylindrischen Aufnahmeraum 20 eines Lagergehäuses 21 axial (hier von links) eingesetzt, bis der Stützring 19 an einem umlaufenden Stützsteg 22 im Aufnahmeauge 20 anliegt und abgestützt ist. Der gegenüberliegende Stützring 18 ist mit Hilfe einer (nicht dargestellten) Pressvorrichtung unter Verformung der Elastomerschicht 17 mittels einer aufgebrachten axialen Einpresskraft als Vorspannkraft in den Aufnahmeraum 20 hinein verlagert. Dadurch wird die Elastomerschicht 17 verformt und durch einen Reibschluss unverdrehbar und unverschiebbar im Lagergehäuse 21 gehalten. In dieser Position wird der Stützring 18 und damit die Elastomerschicht 17 mit einem Sicherungsring 23 in einer umlaufenden Sicherungsnut 24 im Lagergehäuse 21 fixiert.

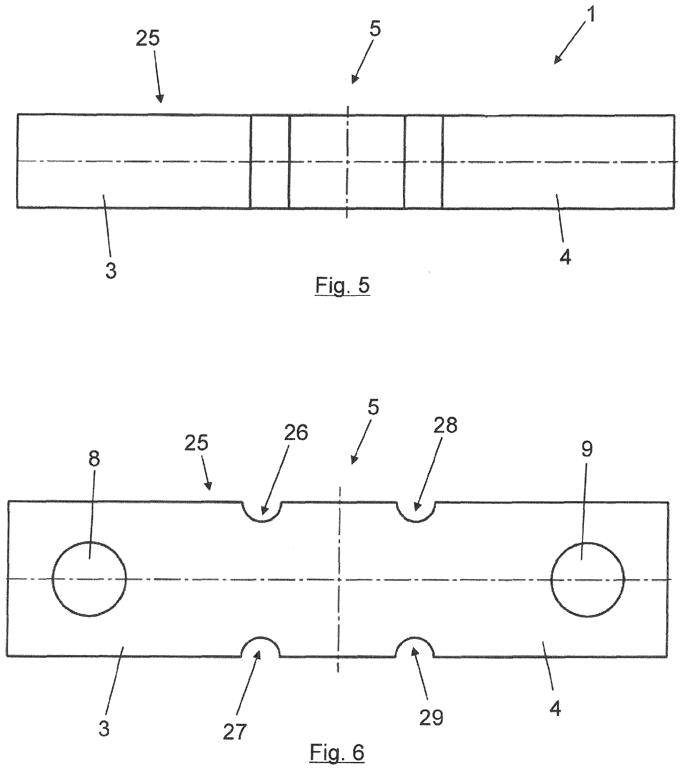

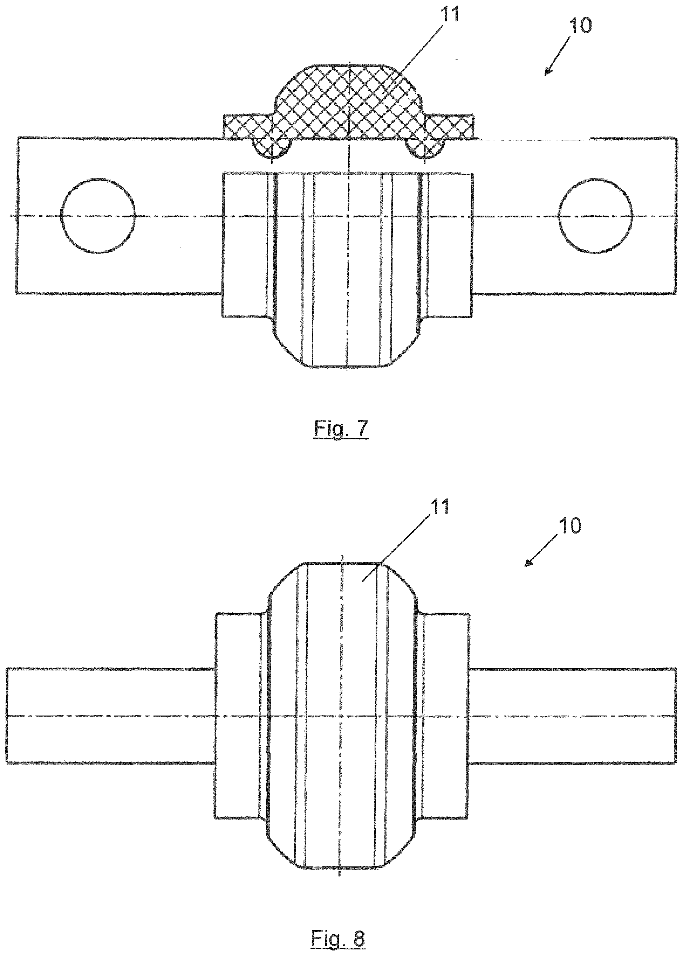

In den Figuren 7 und 8 ist jeweils ein Kugelzapfen 10 gezeigt mit der gleichen Funktion wie die in Figur 2 und Figur 3 dargestellten Kugelzapfen 10. Der Unterschied liegt hier in einer anderen Geometrie des Zapfenteils 1, das hier, wie aus Figur 5 und 6 ersichtlich, aus einem Flachstahlabschnitt 25 mit rechteckigem Querschnitt hergestellt ist. Auch hier sind in den Anschlusspratzen 3, 4 Bohrungen 8, 9 angebracht. In dem zwischen den Anschlusspratzen 3, 4 liegenden Bereich des Kugelinnenteils 5 sind hier anstelle der umlaufenden Querrillen 6, 7 der Ausführungsform nach den Figuren 1 und 2, jeweils beabstandete und gegenüberliegende vier halbzylindrische Ausnehmungen 26 bis 29 angebracht, in denen der aufgespritzte Kunststoffkörper 11 einliegt und gegen hohe Axialkräfte abgestützt ist, wie aus Figur 7 ersichtlich.

**Bezugszeichenliste**

| | | | |
|---|---|---|---|
| 1 | Zapfenteil | 25 | Flachstahlabschnitt |
| 2 | Kugelgelenk | 26 | Ausnehmung |
| 3 | Anschlusspratze | 27 | Ausnehmung |
| 4 | Anschlusspratze | 28 | Ausnehmung |
| 5 | Kugelinnenteil | 29 | Ausnehmung |
| 6 | Querrille | | |
| 7 | Querrille | | |
| 8 | Bohrung | | |
| 9 | Bohrung | | |
| 10 | Kugelzapfen | | |
| 11 | Kunststoffkörper | | |
| 12 | Verdickung | | |
| 13 | Ringschulter | | |
| 14 | Ringschulter | | |
| 15 | Riffelung | | |
| 16 | Elastomer-Metall-Element | | |
| 17 | Elastomerschicht | | |
| 18 | Stützring | | |
| 19 | Stützring | | |
| 20 | Aufnahmeraum | | |
| 21 | Lagergehäuse | | |
| 22 | Stützsteg | | |
| 23 | Sicherungsring | | |
| 24 | Sicherungsnut | | |

## Patentansprüche

1. Kugelgelenk, insbesondere für Fahrzeuge,
- mit einem Kugelzapfen (10) als Lagerinnenteil und als erstes Lagerteil, wobei der Kugelzapfen (10) ein Kugelteil (12) als ballige Verdickung und eine vom Kugelteil abragende Anschlusspratze oder zwei beidseitig gegenüberliegend vom Kugelteil (12) abragende Anschlusspratzen (3, 4) aufweist,
- mit einem Lagergehäuse (21) als zweitem Lagerteil, das das Kugelteil (12) umgibt, und
- mit wenigstens einem zwischen dem Kugelteil (12) und dem Lagergehäuse (21) unter Vorspannung angeordneten und das Kugelteil (12) umgreifenden Elastomer-Element (16),
**dadurch gekennzeichnet,**
**dass** der Kugelzapfen (10) ein langgestrecktes, metallisches Zapfenteil (1) aufweist, das die eine Anschlusspratze oder die beiden Anschlusspratzen (3, 4), sowie ein einteilig und materialeinheitlich daran anschließendes Kugelinnenteil (5) bildet, und
**dass** das Kugelinnenteil (5) mit einem Kunststoff zur Ausbildung der balligen Verdickung (12) als Kunststoffkörper (11) umgeben und beschichtet ist, vorzugsweise festhaftend umspritzt oder umgossen ist.

2. Kugelgelenk nach Anspruch 1, **dadurch gekennzeichnet,**
**dass** das langestreckte, metallische Zapfenteil (1) als Halbzeug und Ausgangsmaterial einen zylindrischen Querschnitt aufweist und ein Rundstahlabschnitt oder ein Stahlrohrabschnitt ist, oder
**dass** das langestreckte, metallische Zapfenteil (1) als Halbzeug und Ausgangsmaterial einen rechteckigen Querschnitt aufweist und ein Flachstahlabschnitt (25) ist.

3. Kugelgelenk nach Anspruch 1 oder 2, **dadurch gekennzeichnet, dass** der Kunststoff ein hochfester Kunststoff mit einer Zugfestigkeit von 80 bis 250 MPa und/oder einer Streckspannung/Bruchspannung von 50 bis 300 MPa ist, wobei die Zugfestigkeit und/oder die Streckspannung/Bruchspannung jeweils gemäß DIN EN ISO 527 bestimmt sind.

4. Kugelgelenk nach einem der Ansprüche 1 bis 3, **dadurch gekennzeichnet, dass** der Kunststoffkörper (11) aus einem glasfaserverstärkten Kunststoff gebildet ist.

5. Kugelgelenk nach Anspruch 4, **dadurch gekennzeichnet, dass** der glasfaserverstärkte Kunststoff einen Glasfaseranteil von 15 bis 70%, bevorzugt einen Glasfaseranteil von 30 bis 50%, aufweist.

6. Kugelgelenk nach einem der Ansprüche 1 bis 5, **dadurch gekennzeichnet, dass** der Kunststoff des Kunststoffkörpers (11) ein Polycaprolactam-Kunststoff oder ein Polyamid-Kunststoff ist.

7. Kugelgelenk nach einem der Ansprüche 1 bis 6, **dadurch gekennzeichnet, dass** die Oberfläche des Kugelinnenteils (5) im Bereich der Kunststoffauflage eine Struktur mit Hinterschnitten (6, 7; 15; 26 bis 29) aufweist.

8. Kugelgelenk nach Anspruch 7, **dadurch gekennzeichnet, dass** die Struktur durch Ausnehmungen (26 bis 29) oder Rillen (6, 7) oder Rippen und/oder durch Oberflächenrändelungen als Riffelung (15) gebildet ist.

9. Kugelgelenk nach einem der Ansprüche 1 bis 8, **dadurch gekennzeichnet,**
**dass** das wenigstens eine Elastomer-Element ein Elastomer-Metall-Element (16) ist, wobei das Elastomer-Metall-Element (16) eine Elastomerschicht (17) aufweist, die den balligen Bereich des Kunststoffkörpers (11), vorzugsweise den balligen Bereich des Kunststoffkörpers (11) und beidseitig daran anschließende, ebenfalls in Verbindung mit der balligen Verdickung (12) durch Kunststoff ausgebildete, zapfenseitige Ringschultern (13, 14), umgibt und dort anvulkanisiert ist oder dort ortsfest durch Vorspannung angepresst ist, dass an beiden axial gegenüberliegenden Seiten der Elastomerschicht (17) jeweils ein, vorzugsweise metallischer, Stützring (18, 19), vorzugsweise in Schräglage entsprechend der Schrägstellung der Kugelform, angeordnet, insbesondere anvulkanisiert, ist, zur Aufbringung einer Vorspannung in der Elastomerschicht (17),
**dass** das Lagergehäuse (21) einen Aufnahmeraum (20), vorzugsweise einen zylindrischen Aufnahmeraum (20), aufweist, in dem der Kugelzapfen (10) mit dem Kugelteil mit der balligen Verdickung (12), gegebenenfalls mit Ringschultern (13, 14), und der umgebenden Elastomerschicht (17) mit den Stützringen (18, 19) aufgenommen ist.

10. Kugelgelenk nach Anspruch 9, **dadurch gekennzeichnet, dass** die Elastomerschicht (17) an der Innenseite des Aufnahmeraums (20) ortsfest durch Vorspannung anliegt, indem der Kugelzapfen (10) axial seitlich in den Aufnahmeraum (20) eingesetzt und mit einem Stützring (19) an einem umlaufenden Stützsteg (22) im Aufnahmeraum (20) abgestützt ist und der gegenüberliegende Stützring (18) nach einer Verlagerung durch eine mit einer Pressvorrichtung aufgebrachten, axialen Einpresskraft als Vorspannkraft in der verlagerten Position mit einem Sicherungsring (23) in eine umlaufenden Sicherungsnut (24) im Aufnahmeraum (20) fixiert ist.

11. Kugelgelenk nach Anspruch 10, **dadurch gekennzeichnet, dass** das Elastomer-Metall-Element (16) geteilt ist und aus zwei Kugelschalenhälften besteht, die auf das Kugelteil (12) axial seitlich aufgesteckt sind und im fertig montierten Zustand des Kugelgelenks (2) axial zusammengespannt und mit einem Sicherungsring (23) gesichert sind.

12. Fahrzeug, insbesondere Nutzfahrzeug, mit einem Kugelgelenk nach einem der vorhergehenden Ansprüche.

13. Drehgestell, insbesondere für ein Schienenfahrzeug, mit einem Kugelgelenk nach einem der vorhergehenden Ansprüche.
